(19) Europäisches Patentamt
European Patent Office
Office européen des brevets

(11) **EP 3 839 425 A1**

(12) **EUROPÄISCHE PATENTANMELDUNG**

(43) Veröffentlichungstag:
**23.06.2021 Patentblatt 2021/25**

(51) Int Cl.:
***G01C 3/06*** *(2006.01)* ***G01C 15/00*** *(2006.01)*
***G02B 27/09*** *(2006.01)*

(21) Anmeldenummer: **19216521.5**

(22) Anmeldetag: **16.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Hilti Aktiengesellschaft**
**9494 Schaan (LI)**

(72) Erfinder:
• **Dang, Lieu-Kim**
**9473 Gams (CH)**

• **Lukic, Sasha**
**9470 Buchs (CH)**

(74) Vertreter: **Hilti Aktiengesellschaft**
**Corporate Intellectual Property**
**Feldkircherstrasse 100**
**Postfach 333**
**9494 Schaan (LI)**

Bemerkungen:
Ein Antrag gemäss Regel 139 EPÜ auf Berichtigung 04.03.2020 liegt vor. Über diesen Antrag wird im Laufe des Verfahrens vor der Prüfungsabteilung eine Entscheidung getroffen (Richtlinien für die Prüfung im EPA, A-V, 3.).

(54) **VERFAHREN ZUM BESTIMMEN EINES ABSTANDES ZWISCHEN EINEM LASERSYSTEM UND EINER PROJEKTIONSFLÄCHE**

(57) Verfahren zum Bestimmen eines Abstandes (D) zwischen einem Lasersystem (11) und einer Projektionsfläche, bei dem ein Laserempfänger (12) auf der Projektionsfläche (13) angeordnet wird. Der Laserempfänger (12) weist ein erstes Detektionsfeld (44), ein zweites Detektionsfeld (45), das in einem Abstand (L) parallel zum ersten Detektionsfeld (44) angeordnet ist, und eine Kontrolleinrichtung (46) auf. Um den Abstand (D) zu bestimmen, wird ein Laserstrahl mit einer Drehzahl um eine Rotationsachse bewegt. Die Kontrolleinrichtung (46) bestimmt beim Auftreffen des Laserstrahls auf das erste Detektionsfeld (44) ein erstes Signal und beim Auftreffen auf das zweite Detektionsfeld (45) ein zweites Signal und ermittelt anschließend eine Zeitdifferenz zwischen dem ersten und zweiten Signal. Der Abstand (D) wird mittels der Zeitdifferenz, der Drehzahl des Lasersystems (11) und dem Abstand (L) zwischen dem ersten und zweiten Detektionsfeld (44, 45) berechnet.

FIG. 2

EP 3 839 425 A1

## Beschreibung

### Technisches Gebiet

Die vorliegende Erfindung betrifft ein Verfahren zum Bestimmen eines Abstandes zwischen einem Lasersystem und einer Projektionsfläche gemäß dem Oberbegriff des Anspruchs 1.

### Stand der Technik

Um Nivellier- oder Markierungsarbeiten im Innen- und Außenbereich durchzuführen, sind Lasersysteme bekannt, die auf einer Projektionsfläche eine linienförmige Lasermarkierung erzeugen. Bei diesen Lasersystemen wird unterschieden zwischen Rotationslasern, die die linienförmige Lasermarkierung durch Rotation einer Strahlumlenkoptik um eine Rotationsachse erzeugen, und Linienlasern, die die linienförmige Lasermarkierung mithilfe einer Strahlformungsoptik, beispielsweise einer Zylinderlinse, einem Prisma oder einem Kegelspiegel, erzeugt. Damit die bekannten Lasersystemen ohne Schutzmaßnahmen in Form von Schutzbrillen und Reflektoren eingesetzt werden können, muss die Laserleistung begrenzt werden, um Schäden des menschlichen Auges zu verhindern. Für Lasersysteme der Laserklasse 2 oder 2M beträgt die maximal zulässige Laserleistung 1 mW.

Durch die Begrenzung der Laserleistung auf Werte kleiner als 1 mW weisen bekannte Lasersysteme der Laserklasse 2 oder 2M den Nachteil auf, dass die linienförmige Lasermarkierung auf der Projektionsfläche schlecht sichtbar ist. Dabei gilt, dass die linienförmige Lasermarkierung umso schlechter sichtbar ist, je breiter die Lasermarkierung auf der Projektionsfläche ist, da die Sichtbarkeit mit sinkender Leistungsdichte abnimmt. Außerdem ist die Qualität der linienförmigen Lasermarkierung auf der Projektionsfläche vom Abstand des Lasersystem zur Projektionsfläche abhängig.

### Darstellung der Erfindung

Die Aufgabe der vorliegenden Erfindung besteht in der Entwicklung eines Verfahrens zum Bestimmen eines Abstandes zwischen einem Lasersystem und einer Projektionsfläche. Dabei soll der apparative Aufwand möglichst gering sein, wobei insbesondere Anpassungen am Strahlengang des Lasersystems vermieden werden sollen.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zum Bestimmen eines Abstandes zwischen einem Lasersystem und einer Projektionsfläche weist erfindungsgemäß folgende Schritte auf:

- Anordnen eines Laserempfängers auf der Projektionsfläche, wobei der Laserempfänger ein erstes Detektionsfeld, ein zweites Detektionsfeld, das in einem Abstand parallel zum ersten Detektionsfeld angeordnet ist, und eine Kontrolleinrichtung umfasst,
- Aussenden eines Laserstrahls und Rotieren des Laserstrahls mit einer Drehzahl um eine Rotationsachse,
- Erfassen eines ersten Signals mittels des ersten Detektionsfeldes und eines zweiten Signals mittels des zweiten Detektionsfeldes,
- Bestimmen einer Zeitdifferenz zwischen dem ersten Signal und dem zweiten Signal und
- Berechnen des Abstandes zwischen dem Lasersystem und der Projektionsfläche mittels der Zeitdifferenz, dem Abstand zwischen dem ersten und zweiten Detektionsfeld und der Drehzahl des Lasersystems.

Beim erfindungsgemäßen Verfahren zum Bestimmen eines Abstandes zwischen einem Lasersystem und einer Projektionsfläche wird ein Laserempfänger verwendet, der auf der Projektionsfläche angeordnet wird. Das Lasersystem und der Laserempfänger werden so zueinander ausgerichtet, dass ein rotierender Laserstrahl des Lasersystems auf den Laserempfänger auftrifft. Der Laserempfänger umfasst ein erstes Detektionsfeld, ein zweites Detektionsfeld, das in einem Abstand parallel zum ersten Detektionsfeld angeordnet ist, und eine Kontrolleinrichtung. Das Lasersystem ist als Rotationslaser ausgebildet und sendet einen Laserstrahl aus, der mit einer Drehzahl um eine Rotationsachse rotiert. Der rotierende Laserstrahl trifft auf das erste Detektionsfeld, das ein erstes Signal erfasst, und mit einer Zeitdifferenz auf das zweite Detektionsfeld, das ein zweites Signal erfasst. Die Zeitdifferenz zwischen dem ersten und zweiten Signal ist abhängig von der Entfernung zwischen dem Lasersystem und dem Laserempfänger, die gleich dem Abstand zwischen dem Lasersystem und der Projektionsfläche ist, da der Laserempfänger auf der Projektionsfläche angeordnet wird. Der Abstand zwischen dem Lasersystem und der Projektionsfläche wird mittels der Zeitdifferenz zwischen dem ersten und zweiten Signal, dem Abstand zwischen dem ersten und zweiten Detektionsfeld und der Drehzahl des Lasersystems berechnet.

Das erfindungsgemäße Verfahren zum Bestimmen eines Abstandes zwischen einem Lasersystem und einer Projektionsfläche weist den Vorteil auf, dass der Abstand zwischen dem Lasersystem und der Projektionsfläche ohne Änderungen am Aufbau des Lasersystems bestimmt werden kann, da der Laserempfänger außerhalb des Lasersystems angeordnet ist. Der Abstand wird bevorzugt von der Kontrolleinrichtung des Laserempfängers berechnet, kann aber auch von einer Kontrolleinrichtung des Lasersystems oder einer weiteren Kontrolleinrichtung berechnet werden.

Die Erfindung betrifft weiterhin ein Verfahren zum Anpassen einer Brennweite einer Fokussieroptik eines Lasersystems abhängig vom Abstand zwischen dem Lasersystem und einer Projektionsfläche, wobei der Abstand mittels des Verfahrens nach Anspruch 1 bestimmt wurde. Als Fokussieroptik ist ein optisches Element definiert, das eine endliche Brennweite aufweist und einen auftreffenden Laserstrahl fokussiert. Ein fokussierter Laserstrahl weist im Bereich der Fokuslage einen kleineren Strahldurchmesser auf als ein nicht-fokussierter Laserstrahl.

Wenn der Abstand zwischen dem Lasersystem und der Projektionsfläche mittels des erfindungsgemäßen Verfahrens bestimmt wurde, kann die Brennweite einer Fokussieroptik, die im Strahlengang des Lasersystems angeordnet ist, an den Abstand angepasst werden. Dies hat den Vorteil, dass auf der Projektionsfläche eine scharf begrenzte linienförmige Lasermarkierung erzeugt werden kann, die eine hohe Qualität aufweist. Je schmaler die linienförmige Lasermarkierung auf der Projektionsfläche ist, umso genauer kann der Bediener die Nivellier- oder Markierungsarbeiten ausführen. Außerdem ist eine scharf begrenzte linienförmige Lasermarkierung für den Bediener besser sichtbar, da die verfügbare Leistung von maximal 1 mW bei Lasersystemen der Laserklasse 2 oder 2M auf eine kleinere Fläche verteilt wird und eine höhere Leistungsdichte resultiert.

Die Erfindung betrifft weiterhin eine Vorrichtung zur Ausführung eines Verfahrens zum Bestimmen eines Abstandes zwischen einem Lasersystem und einer Projektionsfläche nach Anspruch 1, aufweisend das Lasersystem und einen Laserempfänger. Der Abstand zwischen dem Lasersystem und der Projektionsfläche wird mittels des Laserempfängers bestimmt, der auf der Projektionsfläche angeordnet ist. Dabei wird der Abstand zwischen dem Lasersystem und der Projektionsfläche über die Entfernung zwischen dem Lasersystem und dem Laserempfänger bestimmt. Das Lasersystem und der Laserempfänger sind über eine Kommunikationsverbindung miteinander verbindbar ausgebildet und können über diese Kommunikationsverbindung Daten austauschen, die zur Ausführung des Verfahrens zum Bestimmen des Abstandes notwendig sind; außerdem kann der Abstand D übermittelt werden.

Bevorzugt umfasst der Laserempfänger ein erstes Detektionsfeld, ein zweites Detektionsfeld, das in einem Abstand parallel zum ersten Detektionsfeld angeordnet ist, und eine Kontrolleinrichtung. Der spezielle Aufbau des Laserempfängers ermöglicht, den Abstand zwischen dem Lasersystem und der Projektionsfläche zu bestimmen. Der rotierende Laserstrahl trifft auf das erste Detektionsfeld, das ein erstes Signal erfasst, und mit einer Zeitdifferenz auf das zweite Detektionsfeld, das ein zweites Signal erfasst. Da die Zeitdifferenz zwischen dem ersten und zweiten Signal abhängig von der Entfernung zwischen dem Lasersystem und dem Laserempfänger ist, kann der Abstand bzw. die Entfernung mittels der Zeitdifferenz bestimmt werden. Neben der Zeitdifferenz werden der Abstand zwischen dem ersten und zweiten Detektionsfeld und die Drehzahl des Lasersystems benötigt.

In einer bevorzugten Ausführung des Laserempfängers umfasst das erste Detektionsfeld einen ersten Lichtleiter und einen ersten Detektor, wobei der erste Lichtleiter mit dem ersten Detektor optisch verbunden ist, und das zweite Detektionsfeld umfasst einen zweiten Lichtleiter und einen zweiten Detektor, wobei der zweite Lichtleiter mit dem zweiten Detektor optisch verbunden ist und im Abstand parallel zum ersten Lichtleiter angeordnet ist. Der spezielle Aufbau des Laserempfängers ermöglicht, den Abstand zwischen dem Lasersystem und der Projektionsfläche zu bestimmen. Um den Abstand zu bestimmen, sendet das Lasersystem einen Laserstrahl aus, der um die Rotationsachse rotiert und vom Laserempfänger erfasst wird. Beim Auftreffen des Laserstrahls auf den ersten Detektor bestimmt die Kontrolleinrichtung ein erstes Signal und beim Auftreffen des Laserstrahls auf den zweiten Detektor bestimmt die Kontrolleinrichtung ein zweites Signal. Der Abstand zwischen dem Lasersystem und dem Laserempfänger kann aus einer Zeitdifferenz zwischen dem ersten und zweiten Signal, der Drehzahl des Lasersystems und dem Abstand zwischen dem ersten und zweiten Lichtleiter berechnet werden.

Bevorzugt weist der Laserempfänger einen Orientierungssensor auf, der ausgebildet ist, die Orientierung des Laserempfängers zu einer Gravitationsrichtung und/oder zum Lasersystem zu bestimmen. Die Verwendung eines Orientierungssensors, der die Orientierung des Laserempfängers zum Gravitationsfeld der Erde und/oder zum Lasersystem bestimmt, kann die Genauigkeit, mit der der Abstand zwischen dem Lasersystem und der Projektionsfläche bestimmt werden kann, erhöhen.

In einer ersten Variante wird die Orientierung des Laserempfängers angezeigt und der Bediener hat die Möglichkeit, den Laserempfänger mithilfe des Orientierungssensors so auszurichten, dass das erste und zweite Detektionsfeld parallel zur Gravitationsrichtung des Gravitationsfeldes ausgerichtet sind und der Abstand möglichst genau bestimmt werden kann.

In einer zweiten Variante wird die Orientierung des Laserempfängers bei der Bestimmung des Abstandes zwischen dem Lasersystem und der Projektionsfläche berücksichtigt. Dazu ist der Orientierungssensor mit der Kontrolleinrichtung des Laserempfängers verbunden und übermittelt die Orientierung des Laserempfängers an die Kontrolleinrichtung.

**Ausführungsbeispiele**

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:

FIG. 1    eine erfindungsgemäße Vorrichtung, die ein als Rotationslaser ausgebildetes Lasersystem und einen Laserempfänger aufweist und die zur Ausführung eines erfindungsgemäßen Verfahrens zum Bestimmen eines Abstandes zwischen dem Lasersystem und einer Projektionsfläche ausgebildet ist, in einer schematischen Darstellung; und

FIG. 2    den Aufbau des Laserempfängers der FIG. 1 und das Zusammenwirken des Laserempfängers mit dem Rotationslaser in Form eines Blockdiagramms.

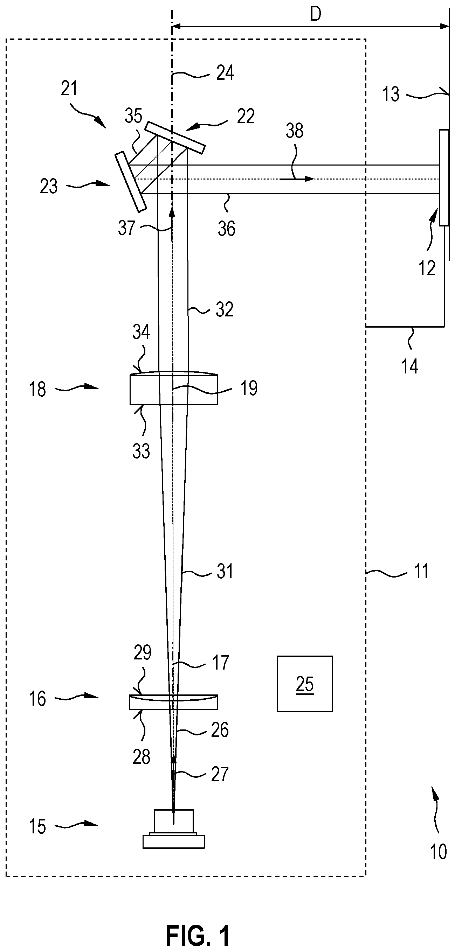

**FIG. 1** zeigt eine erfindungsgemäße Vorrichtung **10**, die ein als Rotationslaser ausgebildetes Lasersystem **11** und einen Laserempfänger **12** aufweist und die zur Ausführung eines Verfahrens zum Bestimmen eines Abstandes **D** zwischen dem Lasersystem 11 und einer Projektionsfläche **13** ausgebildet ist.

Der Rotationslaser 11 und der Laserempfänger 12 sind über eine Kommunikationsverbindung **14** miteinander verbunden und können über diese Kommunikationsverbindung 14 Daten austauschen, die zur Ausführung des Verfahrens zum Bestimmen des Abstandes D notwendig sind; außerdem kann der Abstand D übermittelt werden. Der Rotationslaser 11 umfasst eine Laserstrahlquelle **15**, eine als Fokussieroptik ausgebildete erste Strahlformungsoptik **16** mit einer ersten optischen Achse **17**, eine als Kollimationsoptik ausgebildete zweite Strahlformungsoptik **18** mit einer zweiten optischen Achse **19** und eine Strahlumlenkoptik **21** mit einer ersten Spiegelfläche **22** und einer zweiten Spiegelfläche **23**, wobei die Strahlumlenkoptik 21 um eine Rotationsachse **24** verstellbar ausgebildet ist. Die Steuerung des Lasersystems erfolgt mittels einer Kontrolleinrichtung **25.**

Die optischen Komponenten des Rotationslasers 11 sind in der Reihenfolge Laserstrahlquelle 15, Fokussieroptik 16, Kollimationsoptik 18 und Strahlumlenkoptik 21 angeordnet. Die Eigenschaften der weiteren optischen Komponenten des Rotationslasers 11 sind an die Wellenlänge der Laserstrahlquelle 15 angepasst. Die erste optische Achse 17 der Fokussieroptik, die zweite optische Achse 19 der Kollimationsoptik 18 und die Rotationsachse 24 der Strahlumlenkoptik 21 sind koaxial zueinander angeordnet.

Die Laserstrahlquelle 15 kann als Halbleiterlaser mit einer Wellenlänge im sichtbaren Spektrum ausgebildet sein, beispielsweise als roter Halbleiterlaser mit einer Wellenlänge von 635 nm oder als grüner Halbleiterlaser mit einer Wellenlänge zwischen 510 und 555 nm; die weiteren optischen Komponenten sind an die Wellenlänge angepasst. Die Laserstrahlquelle 15 erzeugt einen divergenten Laserstrahl **26**, der entlang einer Ausbreitungsrichtung **27** ausgesandt wird und auf die Fokussieroptik 16 gerichtet ist.

Die Fokussieroptik 16 ist als Strahlformungsoptik mit einer planen Eintrittsfläche **28** und einer gekrümmten Austrittsfläche **29** ausgebildet und weist eine verstellbare Brennweite f auf. Die erste optische Achse 17 der Fokussieroptik 16 ist definiert als Gerade, die durch den Krümmungsmittelpunkt der Austrittsfläche verläuft und senkrecht auf einer Eintrittsfläche steht. Im Ausführungsbeispiel ist die Eintrittsfläche der Fokussieroptik 16 als plane Fläche und die Austrittsfläche als gekrümmte Fläche ausgebildet, wobei die Krümmung der Austrittsfläche verstellbar ist. Alternativ kann die Eintrittsfläche als gekrümmte Fläche und die Austrittsfläche als plane Fläche ausgebildet sein oder die Ein- und Austrittsflächen sind als gekrümmte Flächen ausgebildet.

Die Brennweite f der Fokussieroptik 16 wird insbesondere abhängig vom Abstand D zwischen dem Lasersystem 11 und der Projektionsfläche 13 eingestellt. Der Abstand D wird mittels des erfindungsgemäßen Verfahrens zum Bestimmen des Abstandes D bestimmt und an die Kontrolleinrichtung 25 übermittelt. Dies hat den Vorteil, dass auf der Projektionsfläche 13 eine scharf begrenzte linienförmige Lasermarkierung erzeugt werden kann, die eine hohe Qualität aufweist. Je schmaler die linienförmige Lasermarkierung auf der Projektionsfläche 13 ist, umso genauer kann der Bediener die Nivellier- oder Markierungsarbeiten ausführen. Außerdem ist eine scharf begrenzte linienförmige Lasermarkierung für den Bediener besser sichtbar, da die verfügbare Leistung von maximal 1 mW bei Lasersystemen der Laserklasse 2 oder 2M auf eine kleinere Fläche verteilt wird und eine höhere Leistungsdichte resultiert.

Die Fokussieroptik 16 erzeugt einen fokussierten Laserstrahl **31**, der auf die Kollimationsoptik 18 trifft, die den fokussierten Laserstrahl in einen kollimierten Laserstrahl **32** umformt. Die Kollimationsoptik 18 ist als Strahlformungsoptik mit einer planen Eintrittsfläche **33** und einer gekrümmten Austrittsfläche **34** ausgebildet; alternativ kann die Eintrittsfläche als gekrümmte Fläche und die Austrittsfläche als plane Fläche ausgebildet sein oder die Ein- und Austrittsflächen sind als gekrümmte Flächen ausgebildet. Die zweite optische Achse 19 der Kollimationsoptik 18 ist definiert als Gerade, die durch den Krümmungsmittelpunkt der Austrittsfläche 34 verläuft und senkrecht auf der Eintrittsfläche 33 steht.

Der kollimierte Laserstrahl 32 trifft auf die Strahlumlenkoptik 21, an der ersten Spiegelfläche 22 erfolgt eine erste Umlenkung und an der zweiten Spiegelfläche 23 eine zweite Umlenkung des kollimierten Laserstrahls 32. Der an der ersten Spiegelfläche 22 umgelenkte Laserstrahl wird als einfach umgelenkter Laserstrahl 35 und der an der zweiten Spiegelfläche 23 umgelenkte Laserstrahl als zweifach umgelenkter Laserstrahl 36 bezeichnet. Die erste und zweite Spiegelfläche 22, 23 sind so zueinander ausgerichtet, dass eine Ausbreitungsrichtung 37 des in die Strahlumlenkoptik 21 eintretenden Laserstrahls senkrecht zu einer Ausbreitungsrichtung 38 des aus der Strahlumlenkoptik 21 austretenden Laserstrahls angeordnet ist. Der zweifach umgelenkte Laserstrahl verlässt den Rotationslaser 11 und erzeugt auf der Projektionsfläche 13 eine linienförmige Lasermarkierung.

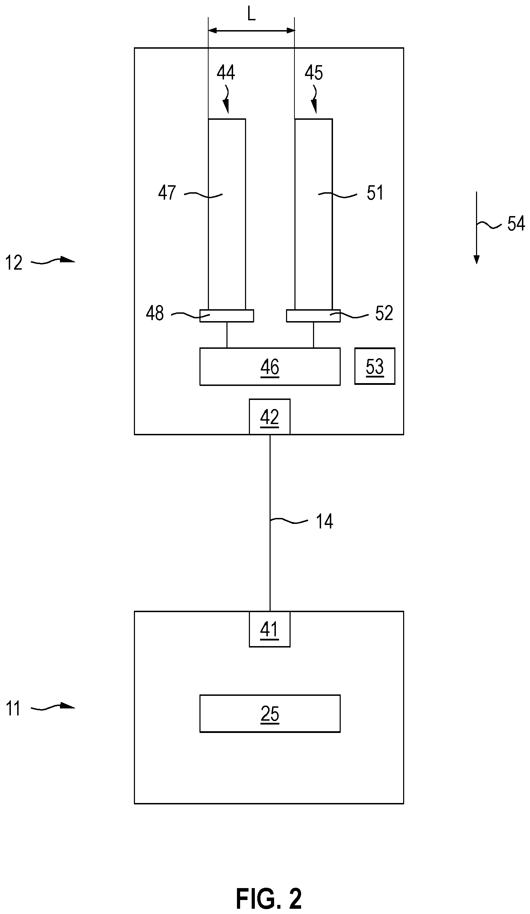

FIG. 2 zeigt den Aufbau des Laserempfängers 12 und das Zusammenwirken mit dem Rotationslaser 11 in einer schematischen Darstellung. Die Kommunikation und der Datenaustausch zwischen dem Laserempfänger 12 und dem Rotationslaser 11 erfolgt über die Kommunikationsverbindung 14. Der Rotationslaser 11 weist ein erstes Sende- und/oder Empfangselement 41 auf, der Laserempfänger 12 weist ein zweites Sende- und/oder Empfangselement 42 auf und die Kommunikationsverbindung 14 verbindet das erste und zweite Sende- und/oder Empfangselement 41, 42 miteinander.

Das erste und zweite Sende- und/oder Empfangselement 41, 42 sind beispielsweise als Funkmodule ausgebildet und die Kommunikation zwischen dem Laserempfänger 12 und dem Rotationslaser 11 erfolgt über eine als Funkverbindung ausgebildete Kommunikationsverbindung 14; alternativ kann die Kommunikationsverbindung 14 als kabellose Kommunikationsverbindung in Form einer Infrarot-, Bluetooth-, WLAN- oder Wi-Fi-Verbindung oder als kabelgebundene Kommunikationsverbindung ausgebildet sein. Neben den aufgeführten kabellosen Verbindungstechnologien eignen sich sämtliche bereits bekannten und zukünftigen kabellosen Verbindungstechnologien zur Datenübertragung.

Der spezielle Aufbau des Laserempfängers 12 ermöglicht, den Abstand D zwischen dem Rotationslaser 11 und der Projektionsfläche 14, der gleich der Entfernung zwischen dem Rotationslaser 11 und dem Laserempfänger 12 ist, zu bestimmen. Der Laserempfänger 12 weist ein erstes Detektionsfeld 44, ein zweites Detektionsfeld 45 und eine Kontrolleinrichtung 46 auf, wobei das erste und zweite Detektionsfeld 44, 45 in einem Abstand L parallel zueinander angeordnet sind. Das erste Detektionsfeld 44 umfasst einen ersten Lichtleiter 47 und einen ersten Detektor 48, der mit dem ersten Lichtleiter 47 optisch verbunden und an einem Ende des ersten Lichtleiters 47 angeordnet ist. Das zweite Detektionsfeld 45 umfasst einen zweiten Lichtleiter 51 und einen zweiten Detektor 52, der mit dem zweiten Lichtleiter 51 optisch verbunden und an einem Ende des zweiten Lichtleiters 51 angeordnet ist. Der erste und zweite Lichtleiter 47, 51 weisen die gleiche Länge auf und sind im Abstand L parallel zueinander angeordnet.

Um den Abstand D zu bestimmen, sendet der Rotationslaser 11 einen Laserstrahl aus, der mit einer Drehzahl RPM um die Rotationsachse 24 rotiert und vom Laserempfänger 12 erfasst wird. Der rotierende Laserstrahl trifft mit einer Zeitdifferenz auf den ersten und zweiten Lichtleiter 47, 51. Dabei wird der Laserstrahl im Inneren des ersten Lichtleiters 47 zum ersten Detektor 48 gestreut und im Inneren des zweiten Lichtleiters 51 zum zweiten Detektor 52 gestreut. Beim Auftreffen des gestreuten Laserstrahls auf den ersten Detektor 48 bestimmt die Kontrolleinrichtung 46 ein erstes Signal und beim Auftreffen des gestreuten Laserstrahls auf den zweiten Detektor 52 bestimmt die Kontrolleinrichtung 46 ein zweites Signal. Die Kontrolleinrichtung 46 ermittelt aus dem ersten und zweiten Signal eine Zeitdifferenz $\Delta$t.

Für den Abstand D zwischen dem Rotationslaser 11 und dem Laserempfänger 12 gilt der Zusammenhang:

$$D = \frac{L}{\sin(2\pi \cdot \Delta t \cdot RPM/60)}$$

Die Drehzahl RPM des Rotationslasers 11 ist eine bekannte Größe für die Bestimmung des Abstandes D und wird üblicherweise in der Einheit Umdrehungen pro Minute angegeben. Da für die Berechnung des Abstandes D aber eine Frequenz in der Einheit Umdrehungen pro Sekunde benötigt wird, wird die Drehzahl RPM umgerechnet.

Im Ausführungsbeispiel weist der Laserempfänger 12 einen Orientierungssensor 53 auf, der ausgebildet ist, eine Orientierung des Laserempfängers 12 zum Gravitationsfeld der Erde und/oder zum Lasersystem 11 zu bestimmen. Um den Abstand D möglichst genau bestimmen zu können, sollten der erste und zweite Lichtleiter 47, 51 parallel zu einer Gravitationsrichtung 54 des Gravitationsfeldes ausgerichtet sein.

In einer ersten Variante kann die Orientierung des Laserempfängers 12 angezeigt werden und der Bediener hat die Möglichkeit, den Laserempfänger 12 mithilfe des Orientierungssensors 53 so auszurichten, dass das erste und zweite Detektionsfeld 44, 45 parallel zur Gravitationsrichtung 54 des Gravitationsfeldes ausgerichtet sind und der Abstand D möglichst genau bestimmt werden kann.

In einer zweiten Variante kann die Orientierung des Laserempfängers 12 bei der Bestimmung des Abstandes D zwischen dem Lasersystem 11 und der Projektionsfläche 13 berücksichtigt werden. Dazu ist der Orientierungssensor 53 mit der Kontrolleinrichtung 46 des Laserempfängers 12 verbunden und übermittelt die Orientierung des Laserempfängers 12 an die Kontrolleinrichtung 46. Die Orientierung kann als winkelabhängiger Korrekturfaktor bei der Bestimmung des Abstandes D berücksichtigt werden.

**Patentansprüche**

1. Verfahren zum Bestimmen eines Abstandes (D) zwischen einem Lasersystem (11) und einer Projektionsfläche (13), mit den Schritten:

   ▪ Anordnen eines Laserempfängers (12) auf der Projektionsfläche (13), wobei der Laserempfänger (12) ein erstes Detektionsfeld (44), ein zweites Detektionsfeld (45), das in einem Abstand (L) parallel zum ersten Detektionsfeld (44) angeordnet ist, und eine Kontrolleinrichtung (46) umfasst,
   ▪ Aussenden eines Laserstrahls (26) und Rotieren des Laserstrahls mit einer Drehzahl (RPM) um eine Rotationsachse (24),
   ▪ Erfassen eines ersten Signals mittels des ersten Detektionsfeldes (44) und eines zweiten Signals mittels des zweiten Detektionsfeldes (45),
   ▪ Bestimmen einer Zeitdifferenz ($\Delta t$) zwischen dem ersten Signal und dem zweiten Signal und
   ▪ Berechnen des Abstandes (D) zwischen dem Lasersystem (11) und der Projektionsfläche (13) mittels der Zeitdifferenz ($\Delta t$), dem Abstand (L) zwischen dem ersten und zweiten Detektionsfeld (44, 45) und der Drehzahl (RPM) des Lasersystems (11).

2. Verfahren zum Anpassen einer Brennweite einer Fokussieroptik (16) eines Lasersystems (11) abhängig von einem Abstand (D) zwischen dem Lasersystem (11) und einer Projektionsfläche (13), wobei der Abstand (D) mittels des Verfahrens nach Anspruch 1 bestimmt wurde.

3. Vorrichtung (10) zur Ausführung eines Verfahrens zum Bestimmen eines Abstandes (D) zwischen einem Lasersystem (11) und einer Projektionsfläche (13) nach Anspruch 1, aufweisend das Lasersystem (11) und einen Laserempfänger (12).

4. Vorrichtung nach Anspruch 3, **dadurch gekennzeichnet, dass** der Laserempfänger (12) ein erstes Detektionsfeld (44), ein zweites Detektionsfeld (45), das in einem Abstand (L) parallel zum ersten Detektionsfeld (44) angeordnet ist, und eine Kontrolleinrichtung (46) umfasst.

5. Vorrichtung nach Anspruch 4, **dadurch gekennzeichnet, dass** das erste Detektionsfeld (44) einen ersten Lichtleiter (47) und einen ersten Detektor (48) umfasst, wobei der erste Lichtleiter (47) mit dem ersten Detektor (48) optisch verbunden ist, und das zweite Detektionsfeld (45) einen zweiten Lichtleiter (51) und einen zweiten Detektor (52) umfasst, wobei der zweite Lichtleiter (51) mit dem zweiten Detektor (52) optisch verbunden ist und im Abstand (L) parallel zum ersten Lichtleiter (47) angeordnet ist.

6. Vorrichtung nach einem der Ansprüche 4 bis 5, **dadurch gekennzeichnet, dass** der Laserempfänger (12) einen Orientierungssensor (53) aufweist, der ausgebildet ist, eine Orientierung des Laserempfängers (12) zu einer Gravitationsrichtung (54) und/oder zum Lasersystem (11) zu bestimmen.

**FIG. 1**

FIG. 2

Europäisches
Patentamt

European
Patent Office

Office européen
des brevets

**EUROPÄISCHER RECHERCHENBERICHT**

Nummer der Anmeldung

EP 19 21 6521

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | DE 197 16 710 A1 (AMMANN LASERTECHNIK [CH]) 27. November 1997 (1997-11-27)<br>* Absätze [0023] - [0024]; Abbildungen 1,2,3,5,7 *<br>----- | 1,3,4<br><br>2,5,6 | INV.<br>G01C3/06<br>G01C15/00<br>G02B27/09 |
| Y | EP 2 789 973 A1 (HEXAGON TECHNOLOGY CT GMBH [CH]) 15. Oktober 2014 (2014-10-15)<br>* Absatz [0073] *<br>----- | 2 | |
| Y | US 2018/156971 A1 (DROZ PIERRE-YVES [US] ET AL) 7. Juni 2018 (2018-06-07)<br>* Absätze [0061] - [0068]; Abbildungen 3A,3B *<br>----- | 5 | |
| Y | US 2019/154443 A1 (WINTER ANDREAS [AT] ET AL) 23. Mai 2019 (2019-05-23)<br>* Absätze [0019] - [0020]; Abbildung 1B *<br>----- | 6 | |

RECHERCHIERTE
SACHGEBIETE (IPC)

G01C
G02B

Der vorliegende Recherchenbericht wurde für alle Patentansprüche erstellt

| Recherchenort | Abschlußdatum der Recherche | Prüfer |
|---|---|---|
| Den Haag | 24. November 2020 | Pascheka, Patrick |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
    Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 19 21 6521

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-4

   Anpassen der Brennweite einer Fokussieroptik
   ---

2. Anspruch: 5

   Parallele Anordnung zweier optisch miteinander verbundener Lichtleiter
   ---

3. Anspruch: 6

   Orientierungssensor, der die Orientierung des Laserempfängers zum Gravitationsfeld der Erde und/oder zum Lasersystem bestimmt
   ---

**ANHANG ZUM EUROPÄISCHEN RECHERCHENBERICHT
ÜBER DIE EUROPÄISCHE PATENTANMELDUNG NR.**

EP 19 21 6521

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-11-2020

| Im Recherchenbericht angeführtes Patentdokument | Datum der Veröffentlichung | Mitglied(er) der Patentfamilie | Datum der Veröffentlichung |
|---|---|---|---|
| DE 19716710 A1 | 27-11-1997 | CH 693579 A5<br>DE 19716710 A1 | 15-10-2003<br>27-11-1997 |
| EP 2789973 A1 | 15-10-2014 | CN 104101999 A<br>EP 2789973 A1<br>US 2014304994 A1 | 15-10-2014<br>15-10-2014<br>16-10-2014 |
| US 2018156971 A1 | 07-06-2018 | CN 110036264 A<br>EP 3529571 A1<br>JP 2020501133 A<br>KR 20190077625 A<br>US 2018156971 A1<br>US 2020225410 A1<br>WO 2018102628 A1 | 19-07-2019<br>28-08-2019<br>16-01-2020<br>03-07-2019<br>07-06-2018<br>16-07-2020<br>07-06-2018 |
| US 2019154443 A1 | 23-05-2019 | EP 3173740 A1<br>EP 3384235 A1<br>US 2019154443 A1<br>WO 2017093085 A1 | 31-05-2017<br>10-10-2018<br>23-05-2019<br>08-06-2017 |

EPO FORM P0461

Für nähere Einzelheiten zu diesem Anhang : siehe Amtsblatt des Europäischen Patentamts, Nr.12/82